# EUROPEAN PATENT SPECIFICATION

(11) **EP 2 750 870 B1**
(45) Date of publication and mention of the grant of the patent: **03.02.2016**
(21) Application number: 12784700.2
(22) Date of filing: 26.09.2012
(51) Int. Cl.: B29D 30/30, B29D 30/06

(54) **A METHOD OF CONTROLLING BUILDING OF A TYRE AND GROUP OF TYRES OF ONE PRODUCTION BATCH**
VERFAHREN ZUR KONTROLLE DER HERSTELLUNG EINES REIFENS UND GRUPPE VON REIFEN EINER PRODUKTIONSCHARGE
PROCÉDÉ PERMETTANT DE RÉGLER LA FABRICATION D'UN PNEUMATIQUE ET GROUPE DE PNEUS D'UN LOT DE PRODUCTION

(30) Priority: 30.09.2011 IT MI20111769; 11.10.2011 US 201161545827 P
(43) Date of publication of application: 09.07.2014
(73) Proprietor: Pirelli Tyre S.p.A., 20126 Milano (IT)
(72) Inventor: PORTINARI, Gianni, I-20126 Milano (IT); DALE', Pietro, I-20126 Milano (IT)
(74) Representative: Vittorangeli, Lucia
(86) International application number: PCT/IB2012/055118
(87) International publication number: WO 2013/046128

(56) References cited:
- WO-A1-2004/022323
- WO-A1-2009/131451
- WO-A1-2010/020398
- WO-A1-2010/126516
- DE-A1- 10 036 010
- US-A1- 2002 062 908

## Description

The present invention relates to a method of controlling building of a tyre and to a group of at least one first and one second tyre belonging to the some production batch.

A tyre for vehicle wheels generally comprises a carcass structure including at least one carcass ply having respectively opposite end flaps in engagement with respective annular anchoring structures integrated into the regions usually identified as "beads", which define the radially internal circumferential edges of the tyre.

Associated with the carcass structure is a crown structure comprising one or more belt layers, put in a radial superposed relationship with each other and with the carcass ply, having textile or metallic reinforcing cords of crossed orientation and/or substantially parallel to the circumferential extension direction of the tyre. At a radially external position a tread band is applied which too is made of elastomeric material like other semifinished products constituting the tyre.

Respective sidewalls of elastomeric material are also applied onto the side surfaces of the carcass structure, at an axially external position, each of them extending from one of the side edges of the tread band until close to the respective annular anchoring structure to the beads. In tyres of the "tubeless" type, an airtight coating layer usually referred to as "liner" covers the inner tyre surfaces.

It should be pointed out, to the aims of the present specification and the following claims, that the term "elastomeric material" is understood as indicating a composition comprising at least one elastomeric polymer and at least one reinforcing filler. Preferably, this composition further comprises additives such as a cross-linking agent and/or a plasticiser, for example. Due to the presence of the cross-linking agent, this material can be cross-linked by heating, so as to form the final manufactured article.

To the aims of the present specification and the following claims, by "continuous elongated semifinished product" it is intended a continuous elongated element having flattened cross-section, made of an elastomeric material. Preferably, said "continuous elongated semifinished product" incorporates one or more textile or metallic reinforcing cords disposed parallel to each other. The continuous elongated semifinished product can be substantially made without a break as the product of devices such as extruders substantially operating continuously. Alternatively, the continuous elongated semifinished product can be obtained by joining portions of a basic elongated semifinished product cut and rotated relative to a longitudinal production direction. The basic semifinished product can be obtained by calendering, for example.

To the aims of the present specification and the following claims, by "preparation joint" it is intended the joint carried out on the cut portions and obtained during production of the continuous elongated semifinished product.

In tyre building, a specific continuous elongated semifinished product can be used for obtaining one or more of: liner, under-liner, carcass ply/plies, under-belt insert, belt strips both crossed with each other and at 0°, attachment skim coat for the tread band, tread band, tread filler, textile, metallic or only elastomeric reinforcing inserts, abrasion-proof insert, sidewall inserts.

In the following of the present specification and in the appended claims the expression "elementary semifinished product" is understood as indicating a segment cut to size of said continuous elongated semifinished product. An elementary semifinished product is bounded by two cutting lines of the respective semifinished product corresponding to two free ends of the elementary semifinished product.

To the aims of the present specification and the following claims, "component" of a tyre means an elementary semifinished product circumferentially wound on a drum by disposing the respective free ends adjacent to each other or in overlapped relationship.

To the aims of the present specification and the following claims, by "building joint" it is intended the joint obtained by moving the respective free ends of an elementary semifinished product adjacent to each other or in overlapped relationship so as to make one component.

To the aims of the present specification and the following claims, "structural portion" of a tyre means an assembly of two or more components laid down at a radially external position relative to each other, adapted to perform a structural function in the tyre. In particular, the carcass structure and crown structure define respective structural portions of a tyre.

To the aims of the present specification and the following claims, the term "carcass structure" is understood as indicating the assembly of at least one carcass ply having respectively opposite end flaps in engagement with respective annular anchoring structures. The carcass structure can further comprise the tyre sidewalls or at least part of same.

To the aims of the present specification and the following claims, the term "crown structure" is understood as indicating the assembly of at least one belt layer and the tread band. The crown structure can further comprise the tyre sidewalls or at least part of same.

To the aims of the present specification and the following claims, "relative position" of the selected joints means the relative angular and/or linear position of the selected joints themselves, reference being preferably made to a joint of a first component to be laid or already laid, for example.

To the aims of the present specification and the following claims, by "Radial Runout (RRO)" it is intended the radius between the centre of a tyre and the road, when loaded to the operating conditions. The RRO value indicates the variation in the circularity during rotation of a tyre.

To the aims of the present specification and the following claims, by "Radial Force Variation (RVF)" it is intended a tyre property characterising the dynamic behaviour between the vehicle and the road surface. While a tyre is rotating, the elastic tyre elements come into contact with the road surface and are compressed. Each elastic element rotating out of the contact area comes back to its original length. The variations in the true stiffness of each elastic element give rise to the Radial Force Variation. The variation in stiffness and therefore in the generated forces is due to the thickness and variation in the elastomeric tyre properties.

To the aims of the present specification and the following claims, by "DOT Code" it is intended an alphanumeric code identifying the production time period and factory of the tyre in the world. Consequently, two or more tyres having the same "DOT Code" belong to the same production batch.

US 2002/062908 discloses a method and a plant for manufacturing a belt structure of a green tire starting from elementary semifinished products. WO2010/126516 discloses a method for improving the uniformity of tires in tire manufacture comprising providing a set of test tires manufactured in a known order; identifying at least one candidate cyclic process effect with a known frequency of introduction; measuring a given uniformity parameter for each tire in the set of test tires; concatenating measured data points for the set of test tires into a concatenated composite waveform; separating at least one process harmonic associated with each of the at least one candidate cyclic process effects from tire harmonics in the concatenated composite waveform; and building a new tire to improve uniformity based on knowledge of each separated process harmonic.

The Applicant could observe that in known production processes, distribution of the building joints is left to the discretion of the technician assembling a tyre.

In addition the Applicant could observe that a control is not carried out on the preparation joints and the distribution of same inside a tyre.

Finally, the Applicant has observed that in known production processes a control of the relative and mutual position of the building joints and preparation joints is not carried out.

The Applicant has perceived that it is important to optimise the evenness of the finished tyre.

The Applicant has further perceived that the presence of the joints constitutes an element of unevenness in the tyre structure and produces an effect on the geometric evenness and the mass and stiffness uniformity of the tyre itself.

In particular, the Applicant has verified that the presence of some joints, their being too close to each other and/or their superposition can even affect the integrity of the tyre in use.

To avoid this drawback, the Applicant has further perceived that it is important to identify a method of distribution of the joints that is predictive and directly connected to the parameter to be optimised.

The Applicant has found that it is possible to optimise the evenness of a tyre by controlling building of same, in particular by controlling distribution of the building joints and preparation joints following application of an algorithm adapted to generate a joint-distribution model associating several tyre components.

More specifically, the Applicant has found that selection of a given number and type of joints and control of the relative and mutual position of these joints on several components enables the value of at least one first parameter describing the evenness of the finished tyre to be optimised.

In greater detail, in accordance with a first aspect, the inventions relates to a method of controlling building of a tyre in which said building comprises:
- making Si continuous elongated semifinished products adapted to form components of at least one structural portion of a tyre, with "i" included between 1 and N, each of said Si semifinished products being obtained through application of a respective manufacturing method in which for a sub-assembly Kj of the Si semifinished products, with "j" included between 1 and M and M<N, formation of preparation joints GPj is provided along the semifinished product itself,
- cutting the Si semifinished products to size for obtaining Ei elementary semifinished products,
- circumferentially winding one of the elementary semifinished products Ei cut to size forming a building joint GCi by moving adjacent to each other or overlapping the respective cutting lines on the semifinished product and obtaining a component Ci of the structural portion;
wherein said method of controlling building of a tyre comprises:
- defining an assembly of selected components comprising an assembly of selected joints including at least two building joints and at least one preparation joint,
- calculating the relative position of the selected joints, the relative position of the at least one preparation joint on the respective component being known, using at least one algorithm adapted to optimise the value of at least one first parameter describing the tyre evenness;
- controlling deposition of the selected components comprising the selected joints for obtaining the calculated relative position of the selected joints themselves.

More particularly, in accordance with a second aspect, the invention relates to a group of at least one first and one second tyre belonging to the same production batch and marked by the same DOT code, wherein each tyre comprises components obtained from elementary semifinished products, wherein each elementary semifinished product comprises respective free ends disposed adjacent to each other or in overlapped relationship to form a building joint, wherein at least one component of each tyre comprises at least one preparation joint, wherein a first assembly of selected joints of the first tyre comprises building joints and at least one preparation joint of at least two selected components of the first tyre, wherein a second assembly of selected joints of the second tyre comprises building joints and at least one preparation joint of at least two selected components of the second tyre, corresponding to the selected components of the first tyre, and wherein the position of the first assembly relative to the at least one corresponding preparation joint and of the second assembly relative to the at least one corresponding preparation joint are different from each other within the same range of values of a first parameter describing the tyre evenness.

It is the Applicant's opinion that the aforesaid solution enables building of tyres with a high evenness standard, so that said tyres in use maintain the same performances as expected from the project.

The present invention, in accordance with at least one of the above aspects, can have one or more of the preferred features hereinafter described.

Preferably, said assembly of selected joints comprises at least three building joints.

Preferably, the first parameter comprises the Radial Runout (RRO) of the tyre.

Preferably, an algorithm is used that is adapted to keep the Radial Runout (RRO) value of the tyre within a range included between about 0 mm and about 1.5 mm, more preferably between about 0 mm and about 0.5 mm.

Preferably, the first parameter comprises the Radial Force Variation (RFV) of the tyre.

Preferably an algorithm is used that is adapted to keep the Radial Force Variation (RFV) value of the tyre within a range included between about 0 N and about 80 N, more preferably between about 0 N and about 40 N.

Preferably, use is made of an algorithm adapted to minimise both the value of a first parameter comprising the Radial Runout (RRO) of the tyre and the value of a second parameter comprising the Radial Force Variation (RFV) of the tyre.

Reference to an objective parameter allows the method according to the present invention to be applied to each individual tyre.

In accordance with a possible embodiment, at least one of said selected joints belongs to a structural portion different from that to which the other selected joints belong.

Application of the method to different structural portions enables a general picture of the tyre to be obtained, each of them being taken separately from the others.

Preferably, at least one first joint of said selected joints belongs to a carcass structure, and at least one second joint of said selected joints belongs to a crown structure, said carcass structure and crown structure defining respective structural portions of the tyre.

Optimising the two main structural portions of the tyre makes control extended to all the tyre building steps.

In particular, at least one of said selected joints belongs to a carcass ply, and/or a tread band, and/or a sidewall.

The Applicant has perceived that these components are those that more deeply affect the tyre evenness.

In a first embodiment, the method according to the present invention comprises:
- setting the selected components of the carcass structure and crown structure,
- calculating the relative position of the selected joints of the carcass structure and crown structure,
- controlling deposition of the selected components belonging to the carcass structure for obtaining the calculated relative position, of the selected joints of the carcass structure,
- controlling deposition of the selected components belonging to the crown structure for obtaining the calculated relative position of the selected joints of the crown structure.

This method enables management of the two main structural portions of the tyre with the same algorithm.

In addition, it is also possible to calculate the angular phase shift between the crown structure and carcass structure obtained separately, as a function of the calculated relative position of the selected joints, and to control coupling between the carcass structure and crown structure for obtaining the calculated angular phase shift.

Preferably, the method according to the present invention may contemplate: detecting the geometry of the carcass structure, calculating a variation of the angular phase shift between the crown structure and carcass structure, as a function of the geometry of the carcass structure, controlling coupling between the carcass structure and crown structure for obtaining the calculated angular phase shift inclusive of variation.

Application of a true reading of the carcass structure geometry enables the angular phase shift error between the two main structural portions of the tyre to be cancelled.

In a second embodiment, the method according to the present invention comprises:
- setting the selected components of the carcass structure,
- calculating the relative position of the selected joints of the carcass structure using a first algorithm adapted to optimise the value of a first parameter describing the tyre evenness,
- controlling deposition of the selected components belonging to the carcass structure for obtaining the calculated relative position of the selected joints of the carcass structure,
- detecting the geometry of the carcass structure,
- setting the selected components of the crown structure,
- calculating the relative position of the selected joints of the crown structure using a second algorithm adapted to optimise the value of the first parameter describing the tyre evenness as a function of the true geometry of the carcass structure,
- controlling deposition of the selected components belonging to the crown structure for obtaining the calculated relative position of the selected joints of the crown structure.

A method according to this further embodiment enables the algorithm that is the most appropriate to each structure portion to be selected and is based on a true reading of the carcass structure geometry.

Preferably, provision is made for controlling coupling between the carcass structure and crown structure.

In accordance with a possible embodiment, the method of controlling building of a tyre according to the present invention comprises detecting the presence of the at least one preparation joint and a position thereof relative to at least one of the two cutting lines of the respective semifinished product.

Preferably, provision may be made for monitoring at least one semifinished product belonging to the sub-assembly Kj of the semifinished products obtained by a manufacturing method in which formation of preparation joints along the semifinished product is provided, and for detecting the presence of a preparation joint and the linear distance of same relative to at least one of the two cutting lines of the monitored semifinished product.

In accordance with a possible embodiment, the method according to the present invention can contemplate: setting a constraint in the calculation of the relative position of the selected joints, and discarding a length of the at least one semifinished product belonging to the sub-assembly Kj obtained by a manufacturing method in which formation of preparation joints is provided along the semifinished product in case of non-observance of said constraint.

Preferably, provision may be made for maximising the minimum (angular and/or linear) distance between the selected joints.

Preferably, a different weight to each selected joint and/or each selected component can be ascribed, as a function of the influence of same on said first parameter.

Preferably, in a group of at least one first and one second tyre belonging to the same production batch, the position of the first assembly relative to the at least one corresponding preparation joint and of the second assembly relative to the at least one corresponding preparation joint are different from each other within a 20% variation of the value of a first parameter describing the tyre evenness.

Preferably, said variation of the value of a first parameter describing the tyre evenness is within 10%.

Preferably, the first parameter comprises the Radial Runout (RRO) of each tyre.

Preferably, the Radial Runout (RRO) value of each tyre is included between about 0 mm and about 1.5 mm, more preferably between about 0 mm and about 0.5 mm. Advantageously, the first parameter comprises the Radial Force Variation (RFV) of each tyre.

Preferably, the Radial Force Variation (RFV) value of each tyre is included between about 0 N and about 80 N, more preferably between about 0 N and about 40 N.

Further features and advantages will become more apparent from the detailed description of a preferred but not exclusive embodiment of a method of controlling building of a tyre, in accordance with the present invention.

This description will be set out hereinafter with reference to the accompanying drawings given by way of non-limiting example, in which:
- Fig. 1 diagrammatically shows a fragmentary diametrical view in section of a tyre that can be manufactured by the method in reference;
- Fig. 2 diagrammatically shows in plain view, a plant for manufacturing tyres which is suitable for application of a method according to the present invention;
- Fig. 3 is a diagrammatic plan view of a portion of the plant seen in Fig. 2;
- Fig. 4 shows a deposition diagram of a tyre component;
- Fig. 5 is a deposition diagram of an assembly of tyre components;
- Fig. 6 shows a first application diagram of the method according to the present invention;
- Fig. 7 shows a second application diagram of the method according to the present invention.

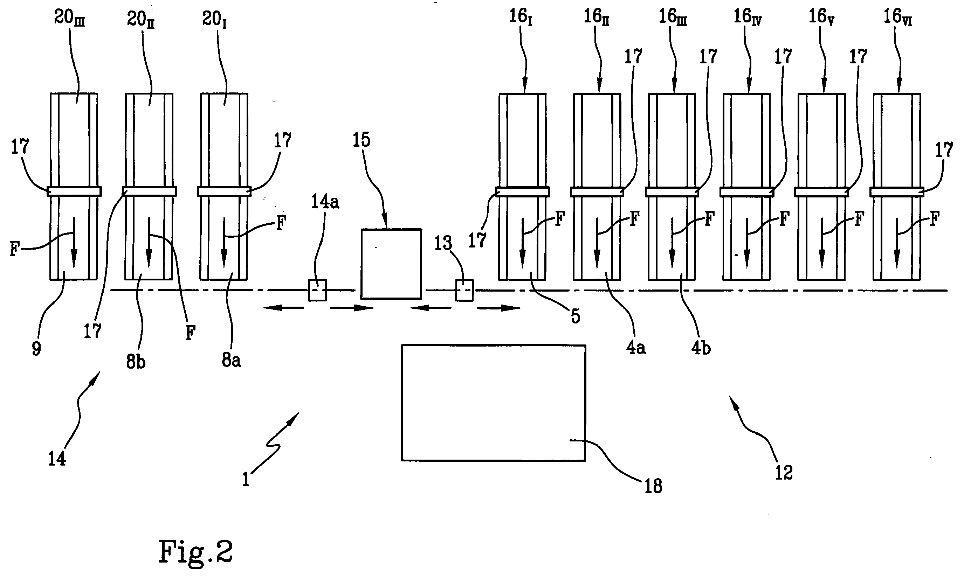

With reference to Fig. 2, a plant for tyre building has been generally denoted at 1.

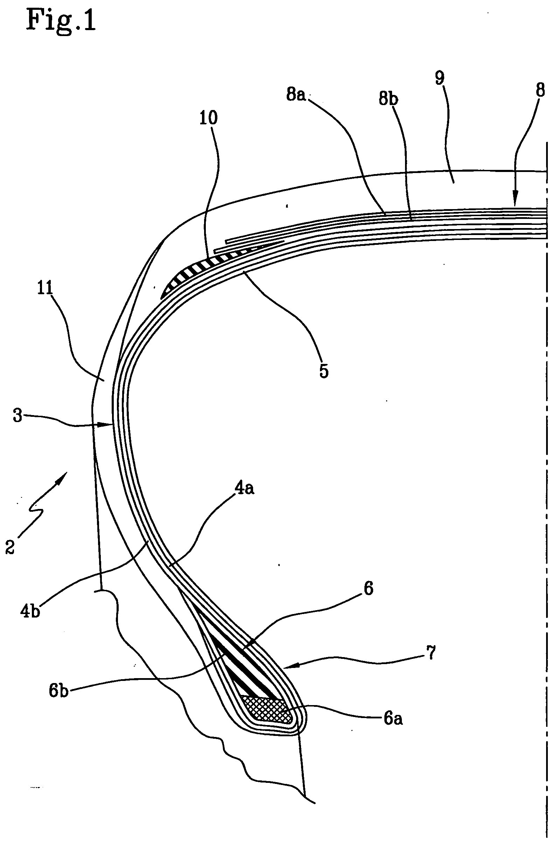

An example of a tyre 2 that can be manufactured in said plant and following the method in accordance with the present invention is shown in Fig. 1 and it essentially comprises a carcass structure 3 having one or two (as in Fig. 1) carcass plies 4a, 4b. A layer of airtight elastomeric material, a so-called liner 5, is internally applied to the carcass ply/plies 4a, 4b. Two annular anchoring structures 6, each including a so-called bead core 6a carrying an elastomeric filler 6b at a radially external position, are engaged with respective end flaps of the carcass ply/plies 4a, 4b. The annular anchoring structures 6 are integrated in the vicinity of regions usually identified as "beads" 7, at which usually engagement between tyre 2 and a respective mounting rim occurs. A crown structure including a belt structure 8 having one or more belt layers 8a, 8b and a tread band 9 at a radially external position thereof, is circumferentially applied around the carcass structure 3.

So-called "under-belt inserts" 10 can be associated with the belt structure 8 and they are each placed between the carcass plies 4a, 4b and one of the axially opposite end edges of the belt structure 8. Two sidewalls 11 each extending from the corresponding bead 7 to a respective side edge of the tread band 9 are applied to the carcass plies 4a, 4b, at laterally opposite positions.

Said tyre components can be manufactured on one or more drums by moving said drums between different feeding stations supplying semifinished products, at each of said stations suitable devices applying the aforesaid semifinished products onto said drums.

Plant 1 shown in Fig. 2 comprises a carcass structure building line 12 at which one or more forming drums 13 are moved between different feeding stations supplying continuous elongated semifinished products, which stations are designed to form a carcass structure on each forming drum 13. According to a possible example, the carcass structure thus made comprises one or more carcass plies 4a, 4b, liner 5, the annular anchoring structures 6 and possibly at least part of the sidewalls 11.

Plant 1 shown in Fig. 2 further comprises a crown structure building line 14, at which one or more auxiliary drums 14a are sequentially moved between different work stations designed to form a crown structure on each auxiliary drum, which crown structure comprises one or more belt layers 8a, 8b, the tread band 9 and possibly at least part of the sidewalls.

The plant further comprises an assembling station 15 at which the carcass structure is coupled to the crown structure.

The manufactured tyres 2 are ultimately transferred to at least one curing and moulding station, not shown.

With reference to Fig. 2, the carcass structure building line 12 comprises feeding stations 16i, 16ii, 16iii, 16iv, 16v, 16vi (six in number in the example shown), disposed consecutively after each other, for example. More generally, in other variants of the plant not shown, the number of the feeding stations of the carcass structure building line 12 can be preferably included between four and ten.

Each feeding station is adapted to supply a continuous elongated semifinished product suitable to form one component of the carcass structure 3.

Each feeding station is provided with a cutting device 17 to cut the continuous elongated semifinished products to size, thus forming an elementary semifinished product.

Denoted at "F" is the feeding direction of the elementary semifinished product to the respective forming drum 13.

With reference to Fig. 2, denoted at 18 has been an apparatus for location of the annular anchoring structures 6 and turning-up of the end flaps of the carcass plies 4a, 4b, and an apparatus for rolling of the turned-up flaps.

According to a possible embodiment, the carcass structure building line 12 can comprise a first feeding station for supplying liner 5, a second feeding station for supplying the first carcass ply 4a and a third feeding station for supplying the second carcass ply 4b. Such a plant is suitable to build a tyre 2 including a carcass structure as shown in Fig. 1.

In use, with reference to the embodiment shown in Fig. 2, the forming drum 13 is subsequently disposed close to one of the feeding stations. With particular reference to the above described example, the liner 5 feeding station performs the operation of cutting to size a strip of liner, into the form of an elementary semifinished product, which strip is wound up on the radially external surface of the forming drum 13 forming one component of the carcass structure.

Subsequently, the forming drum 13 moves to the second feeding station where it receives the first carcass ply 4a in the form of an elementary semifinished product. The first carcass ply 4a wound up at a position radially external to the liner forms a second component of the carcass structure.

Subsequently, the forming drum 13 moves to the third feeding station for receiving the second carcass ply 4b in the form of an elementary semifinished product that, wound up at a radially external position to the first carcass ply 4a, forms the third component of the carcass structure.

With reference to the plant shown in Fig. 2, the forming drum 13 provided with the just formed carcass structure, moves in apparatus 18 for location of the annular anchoring structures 6 and turning up of the end flaps of the carcass plies 4a, 4b.

Subsequently a rolling operation is carried out on the turned-up flaps before the forming drum 13 is moved to the assembling station 15.

In accordance with a possible variant, a further feeding station may be provided for applying additional annular inserts, such as at least one portion of the sidewalls 11.

With reference to Fig. 2, the crown structure building line 14 comprises feeding stations 20i, 20ii, 20iii (three in number in the example shown) disposed consecutively after each other, for example. More generally, in other variants of the plant, not shown, the number of the feeding stations of the crown structure building line 14 can be preferably included between three and six.

Each feeding station is suitable to supply a continuous elongated semifinished product adapted to form one component of the crown structure. Each feeding station is provided with a cutting device 17 for cutting the continuous elongated semifinished products to size, thus forming elementary semifinished products.

Denoted at "F" is the feeding direction of the elementary semifinished product to the respective auxiliary drum 14a.

According to a possible embodiment, the crown structure building line 14 can comprise a first station for feeding a first belt layer 8a, a second station for feeding a second belt layer 8b and a third station for feeding the tread band 9. Such a plant is adapted to build a tyre 2 comprising a crown structure as shown in Fig. 1.

In use, with reference to the embodiment in Fig. 2, the auxiliary drum 14a is subsequently disposed close to one of the feeding stations. Referring particularly to the above described example, the first station feeding a first belt layer carries out cutting to size of a strip of the first belt layer 8a forming an elementary semifinished product that is wound up on the radially external surface of the auxiliary drum 14a forming one component of the crown structure.

Subsequently, the auxiliary drum moves to the second feeding station where it receives the second belt layer 8b in the form of an elementary semifinished product. The second belt layer 8b wound up at a radially external position to the first belt layer 8a forms a second component of the crown structure.

Subsequently the auxiliary drum 14a moves to the third feeding station for receiving the tread band 9 in the form of an elementary semifinished product that, wound up at a radially external position to the second belt layer 8b, forms the third component of the crown structure.

In accordance with a possible variant, a further feeding station may be provided for applying a third belt layer (not shown) directly superposed on the second layer 8b, either by spirally winding, in the circumferential direction (i.e. at 0°), a continuous elongated semifinished product preferably comprising at least two cords, more preferably made of nylon, or by winding a further elementary semifinished product similar to the elementary semifinished products used for layers 8a and 8b.

In accordance with a further variant, another feeding station may be provided for applying additional annular inserts such as the under-belt inserts 8c and/or at least one portion of the sidewalls 11 in the continuation of the axially opposite edges of the tread band 9.

In the assembling station 15, operatively interposed between the carcass structure building line 12 and the crown structure building line 14 or operatively integrated into one of them, coupling of each carcass structure to a respective crown structure is carried out. Tyre 2 thus built will be able to be submitted to a curing treatment and/or to other working operations provided in the work cycle.

Both as far as the crown structure is concerned and as far as the carcass structure is concerned, the continuous elongated semifinished product can be directly fed to the feeding station or it can be carried to the inside of the feeding station wound in the form of a reel.

Some of the feeding stations, in smaller number than the overall number of the feeding stations, supply continuous elongated semifinished products obtained by applying a respective manufacturing method in which formation of preparation joints along the semifinished product itself is provided.

In other words, the Applicant provides for making Si continuous elongated semifinished products adapted to form components of at least one structural portion of one tyre, i being included between 1 and N. Each of the Si semifinished products is obtained by applying a respective manufacturing method in which for a sub-assembly Kj of the Si semifinished products, j being included between 1 and M and being M<N, formation of preparation joints GPj along the semifinished product itself is provided.

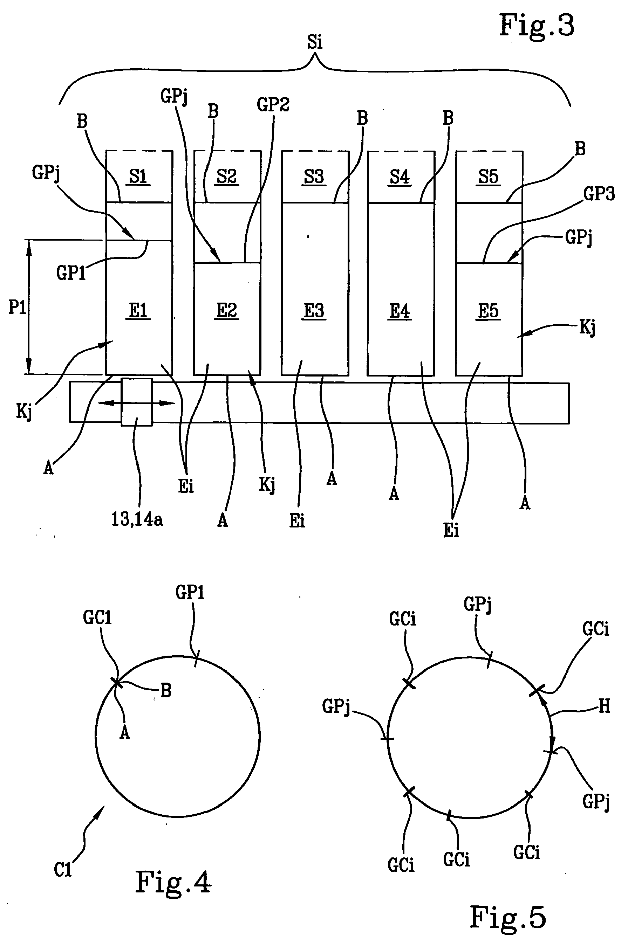

Fig. 3 shows a generic diagram of the feeding stations in which Si continuous elongated semifinished products are shown, i being included between 1 and 5 (N=5). In case in Fig. 3 the sub-assembly Kj comprises S1, S2 and S5 (M=3) along which a respective preparation joint GPj (GP1, GP2, GP3) can be found.

Each elementary semifinished product is bounded by two cutting lines A and B of the respective semifinished product corresponding to two free ends of the elementary semifinished product.

By circumferentially winding up one of the elementary semifinished products Ei cut to size on a respective drum, the respective cutting lines A, B on the semifinished product are moved adjacent to each other or are overlapped forming a building joint GCi. Thus a component Ci of the respective structural portion (carcass structure or crown structure) is obtained.

Shown in Fig. 4 is the first component C1 of the example in Fig. 3 that is obtained by circumferentially winding the elementary semifinished product E1 on the respective (forming, auxiliary) drum. Also shown is the preparation joint GP1 and building joint GC1.

Shown in Fig. 5 is the assembly of the components obtained from the elementary semifinished products of Fig. 3 wound up on the respective drum. Also highlighted are the preparation joints GPj and building joints GCi.

Fig. 3 and Fig. 5 can correspond to a diagram of a possible tyre comprising both the carcass structure and belt structure or a diagram of a possible structural portion of the corresponding tyre, the carcass structure or crown structure, for example.

In accordance with a possible embodiment, the method of controlling building of a tyre according to the present invention comprises defining an assembly of selected components comprising an assembly of selected joints including at least two building joints and at least one preparation joint. With reference to the example shown in Fig. 3, for example, it will be possible to select the components obtained from the semifinished products E1, E3 and E4 generating an assembly of selected joints including GC1, GC3, GC4 and GP1. In accordance with a different example, with reference to Fig. 3, it will be possible, for example, to select the components obtained from the semifinished products E1, E2, E3 and E4 generating an assembly of selected joints comprising GC1, GC2, GC3, GC4 and GP1, GP2.

Provision is also made for calculating the relative angular (possibly linear) position of the selected joints, the relative position of the at least one preparation joint on the respective component being known. In the example shown in Figs 3 and 5 the position of joint GP1 is known relative to the cutting line A (distance P1) and the relative (angular and/or linear) position of the above considered joints GC1, GC3, GC4 is calculated, for example. The building joint GC1 and/or preparation joint GP1 of the first component can be used as the reference for the relative positioning of the remaining selected joints. Advantageously, being known the relative position of the at least one preparation joint on the respective component, the relative position of the selected joints belonging to at least two different tyre components is calculated.

For calculating the relative position of the selected joints, at least one algorithm adapted to optimise the value of at least one first parameter describing the tyre evenness is used.

Finally, provision is made for controlling the deposition of the selected components comprising the selected joints for obtaining the calculated relative position of the selected joints themselves. With reference to Fig. 3 and the first example reproduced above, the deposition of components C1, C3, C4 on the respective drum is controlled, by timing the drum position with the calculation position of the selected joints for each selected component.

In accordance with a first embodiment, the first parameter comprises the tyre Radial Runout (RRO). In this case an algorithm adapted to maintain the tyre Radial Runout (RRO) value included between about 0 mm and about 1.5 mm, preferably between about 0 mm and about 0.5 mm is used.

In accordance with a second embodiment, the first parameter comprises the tyre Radial Force Variation (RFV). In this case an algorithm adapted to maintain the tyre Radial Force Variation (RFV) value included between about 0 N and about 80 N, more preferably between about 0 N and about 40 N is used.

In accordance with a further possible embodiment, an algorithm adapted to minimise both the value of a first parameter including the tyre Radial Runout (RRO) and the value of a second parameter including the tyre Radial Force Variation (RFV) is used.

Preferably, at least one of the selected joints belongs to a structural portion different from that to which the other selected joints belong.

In particular, at least one of the components to which the selected joints belong, belongs to a structural portion different from that to which belong the other components to which the remaining selected joints belong.

The example in Fig. 3 in fact can be seen as the production cycle of the whole tyre or as the production cycle of a single structural portion.

In particular, at least one first joint included between the selected joints belongs to a carcass structure and at least one second joint included between the selected joints belongs to a crown structure. With reference to the above reproduced first example, component C1 obtained from the elementary semifinished product E1 in Fig. 3 may belong to the carcass structure while components C3 and C4 obtained from the elementary semifinished products E3 and E4 of Fig. 3 respectively, may belong to the crown structure.

For instance, at least one of the selected joints belongs to a carcass ply. In this case it may be both a preparation joint and a building joint.

In accordance with a second example, at least one of the selected joints belongs to a tread band. In this case it will be a building joint.

In accordance with a further example, at least one of the selected joints belongs to a sidewall. In this case it will be a building joint.

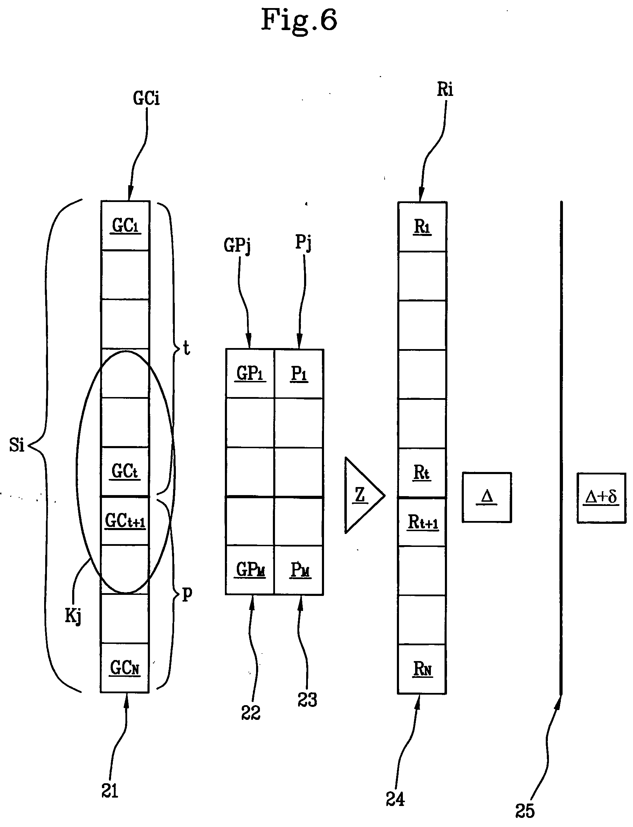

Fig. 6 shows a first application diagram of the method of the invention.

A number N of tyre components are taken into account. N can be smaller than or equal to the number of the components of the tyre itself.

According to the previously described method, Si continuous elongated semifinished products are fed (i being included between 1 and N) to which Ei elementary semifinished products and Ci tyre components correspond. For the sake of representative simplicity, in the example in Fig. 6 only the continuous elongated semifinished products Si are shown.

In the assembly of N tyre components, a number t of components is associated with a structural portion, in particular the carcass structure, while a number p of components is associated with a different structural portion, in particular the crown structure.

Diagrammatically shown in Fig. 6 are the building joints GCi corresponding to the Ci tyre components. In particular, the building joints included between GC1 and GCt belong to components of the carcass structure, while the building joints included between GCt+1 and GCN belong to components of the crown structure. The generic indication GCi corresponds to a building joint of a generic component, without any indication of the structural portion to which it belongs.

Column 21 shows the first of the available data, i.e. the number of the building joints preferably divided between building joints of the carcass structure and building joints of the crown structure. The number of the building joints is coincident with the number N of the continuous elongated semifinished products.

A sub-assembly Kj of the Si continuous elongated semifinished products, j being included between 1 and M, contemplates formation of preparation joints GPj. The sub-assembly Kj is shown in Fig. 6 as part of the assembly Si. Some continuous elongated semifinished products of the sub-assembly Kj belong to the t continuous elongated semifinished products of the carcass structure, while the remaining continuous elongated semifinished products of the sub-assembly Kj belong to the p continuous elongated semifinished products of the crown structure. The generic indication GPj corresponds to the preparation joint of a generic component, without any indication of the structural portion to which it belongs.

Column 22 shows the second of the available data, i.e. the number of preparation joints preferably divided between preparation joints of the carcass structure and preparation joints of the crown structure.

The assembly of the available data comprises the number N of the building joints, the number M of the preparation joints and the relative position Pj of said preparation joints on the elementary semifinished product, the distance from one of the cutting lines A or B, for example. The generic indication Pj corresponds to the position of a preparation joint of a generic component without any indication of the structural portion to which it belongs.

Column 23 shows the third of the available data, i.e. the relative position Pj of the preparation joints on the relative elementary semifinished product, preferably divided between preparation joints of the carcass structure and preparation joints of the crown structure.

In the example shown all joints of components C1 taken into account belong to the assembly of the selected joints. Alternatively, at least two components Ci at least one of which comprises a preparation joint GPj can be taken into account.

Applied to the assembly of all N continuous elongated semifinished products is an algorithm identified by letter Z according to which Ri results are obtained (wherein i varies from 1 to N) which correspond to the relative (angular and/or linear) position of the building joints of the carcass structure and crown structure (i.e. the linear and/or angular distance of the building joints relative to a reference point that, for example, can be the building joint or possibly the preparation joint of the first component to be laid down). These results correspond to the relative angular position of the respective drum during deposition of the respective component (column 24).

In accordance with the example in Fig. 6, the method according to the present invention can therefore provide for:
- setting the selected components of the carcass structure and crown structure (N in case of Fig. 6),
- calculating the relative position of the selected joints of the carcass structure and crown structure, by application of algorithm Z, for example,
- controlling the deposition of the selected components belonging to the carcass structure for obtaining the calculated relative position of the selected joints of the carcass structure, by timing the forming drum 13, for example,
- controlling the deposition of the selected components belonging to the crown structure for obtaining the calculated relative position of the selected joints of the crown structure, by timing the auxiliary drum 14a, for example.

In the building methods and apparatus contemplating manufacture of the carcass structure separately from the crown structure, as shown in Fig. 2 for example, a further result Δ that can be obtained following application of algorithm Z is represented by the relative angular phase shift between the carcass structure and crown structure during the assembling step.

In this case the method of controlling building of a tyre according to the present invention further provides for:
- calculating the angular phase shift Δ between the crown structure and carcass structure obtained separately, as a function of the calculated relative position of the selected joints, by applying algorithm Z, for example
- controlling coupling between the carcass structure and crown structure for obtaining the calculated angular phase shift Δ.

In accordance with a possible embodiment, provision may be also made for:
- detecting the geometry of the carcass structure, before assembly with the crown structure or with the components forming the crown structure, for example,
- calculating a variation δ of the angular phase shift Δ between the crown structure and carcass structure as a function of the geometry of the carcass structure by, for example, applying an algorithm calculating the position of the building joint of the tread band at the minimum of the first harmonic of the carcass structure in order to compensate for the effect thereof,
- controlling coupling between the carcass structure and crown structure for obtaining the calculated angular phase shift inclusive of variation (Δ + δ).

Detection of the geometry of the carcass structure has been diagrammatically indicated by radius 25 in Fig. 6 and can be obtained by use of one or more laser photocells for distance measurement.

Reproduced hereinafter is a numeric example based on the diagram in Fig. 6. Assuming N=10 of which t=6 and p=4. Also assuming M=5 three components of which belong to the carcass structure and two belong to the crown structure. Further assuming that all joints are selected being therefore selected all components both of the carcass structure and the crown structure. Following application of algorithm Z, N, results are obtained that correspond to the relative position of the N components. In particular, N-1 positions can be obtained relative to one of the components, the first to be laid, for example. If the carcass structure and crown structure are made separately (as shown in Fig. 2, for example) it is further possible to obtain as a result, the angular phase shift to be imposed to the two structures.

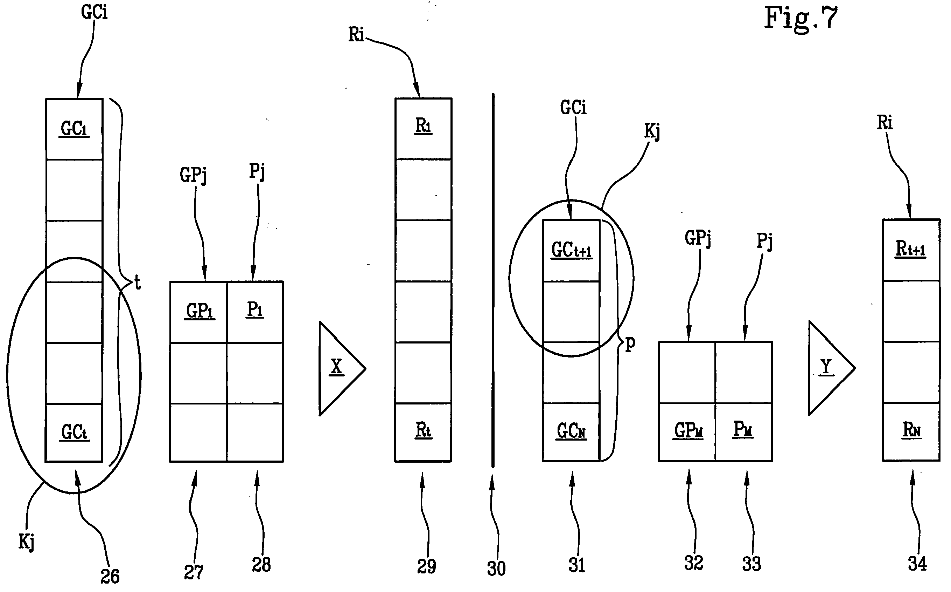

Fig. 7 shows a second application diagram of the method of the invention. References and general aspects in common with the example in Fig. 6 will not be reproduced again.

Unlike that which has been described with reference to Fig. 6, in Fig. 7 the results related to one of the tyre structural portions, preferably the carcass structure, are first calculated and subsequently the results related to a different structural portion, preferably the crown portion, are calculated. The sum of the selected components is in any case N of which a number M comprises preparation joints. In the assembly of N tyre components, a number t of components is associated with a structural portion, in particular the carcass structure, while a number p of components is associated with a different structural portion, in particular the crown portion.

Column 26 shows the first of the available data, i.e. the number t of the building joints of the carcass structure.

Column 27 shows the second of the available data, i.e. the number of the preparation joints of the carcass structure.

Column 28 shows the third of the available data, i.e. the relative position of the preparation joints of the carcass structure on the related elementary semifinished product.

Applied to the assembly of all t elementary semifinished products of the carcass structure is an algorithm identified by letter X, according to which Ri results are obtained (i varying from 1 to t) corresponding to the relative (linear and/or angular) position of the building joints of the carcass structure (i.e. the linear or angular distance of the building joints relative to a reference point that, for example, can be the building joint of the first component to be laid). These results correspond to the relative angular position of the forming drum 13 during deposition of the respective component (column 29).

In accordance with the example in Fig. 7, the method according to the present invention can therefore provide for:
- setting the selected components of the carcass structure (t in the example in Fig. 3),
- calculating the relative position of the selected joints of the carcass structure using a first algorithm adapted to optimise the value of a first parameter describing the tyre evenness, by application of algorithm X for example,
- controlling deposition of the selected components belonging to the carcass structure for obtaining the calculated relative position of the selected joints of the carcass structure, by timing the forming drum 13, for example.

In accordance with the example in Fig. 7, provision is made for detecting the geometry of the carcass structure. Detection of the geometry of the carcass structure has been diagrammatically shown by the radius 30 in Fig. 7 and can be obtained by use of one or more laser photocells for distance measurement.

The true geometry of the carcass structure therefore becomes an available datum that is added to:
- the number p of the building joints of the crown structure (column 31);
- the number of the preparation joints of the crown structure (column 32);
- the relative position of the preparation joints of the crown structure on the related elementary semifinished product.

A second algorithm identified by letter Y is applied to the aforesaid data, according to which p results are obtained (part of the Ri results in which i varies from t+1 to N) which correspond to the relative (linear and/or angular) position of the p building joints of the crown structure (i.e. the linear or angular distance of the building joints relative to a reference point that, for example, can be the building joint of the first component to be laid). These results correspond to the relative angular position of the auxiliary drum during the deposition step of the respective component (column 34).

In accordance with the example in Fig. 7, provision is therefore made for:
- setting the selected components of the crown structure (p in case of the example in Fig. 7),
- calculating the relative position of the selected joints of the crown structure using a second algorithm adapted to optimise the value of the first parameter describing the tyre evenness as a function of the true geometry of the carcass structure (algorithm Y, for example),
- controlling the deposition of the selected components belonging to the crown structure for obtaining the calculated relative position of the selected joints of the crown structure, timing the auxiliary drum 14a, for example.

In the building methods and apparatus contemplating manufacture of the carcass structure separately from the crown structure, as shown in Fig. 2 for example, a further result not seen in Fig. 7 which can be obtained following application of algorithm Y is represented by the relative angular phase shift between the carcass structure and crown structure during the assembly. Preferably, algorithm Y is such that it generates a zero angular phase shift.

For controlling application of said angular phase shift, the method of controlling building of a tyre according to the present invention further contemplates control of the coupling between the carcass structure and crown structure.

Reproduced hereinafter is a numeric example based on the diagram in Fig. 7 (similar to the data reproduced in the numerical example related to the diagram in Fig. 6). Assuming N=10 of which t=6 and p=4. Further assuming M=5 of which three components belong to the carcass structure and two components belong to the crown structure. It is further considered that all joints, and therefore all components both of the carcass structure and the crown structure are selected. Following application of the algorithm X, t results are obtained that correspond to the relative position of the t components of the carcass structure. In particular, t-1 positions can be obtained relative to one of the components, the first one to be laid, for example.

Following true reading of the geometry of the carcass structure and application of the algorithm Y, p results are obtained that correspond to the relative position of the p components of the crown structure. In particular, p-1 positions can be obtained relative to one of the components, the first one to be laid, for example.

Finally, if the carcass structure and crown structure are made separately (as shown in Fig. 2, for example), it is also possible to obtain as the result, the angular phase shift to be imposed to the two structures.

Generally, control of the selected-component deposition preferably takes place by timing the related drum for obtaining the calculated relative position of the selected joints. One of the possible applicable algorithms is that according to which the minimum angular (or possibly linear) distance between the selected joints is maximised.

The minimum-distance maximisation criterion between the joints can be expressed as: max (min H).H (Fig. 5) represents the (linear or angular) distance between two joints belonging to the assembly of the selected joints. Distances H can therefore constitute a symmetric matrix with null diagonal.

This distance H is a function of:
- the n-1 timing or results Ri (expressed as linear or angular distance) of the building joints relative to a reference point that can be the joint of the first material laid, for example;
- the relative position expressed as the linear distance Pi between the preparation joints and the building joints of each material requiring preparation joints (e.g. carcass plies, edges, belts or others).

The results Ri are the independent variables of the system while distances Pi are the measured parameters.

In accordance with a possible embodiment, the method of controlling building of a tyre according to the present invention can further provide for:
- setting a constraint in the calculation of the relative position of the selected joints,
- discarding a length of the at least one semifinished product belonging to the sub-assembly Kj obtained by a manufacturing method in which formation of preparation joints is provided along the semifinished product itself, in case of non-observance of said constraint.

In particular, in case of maximisation of the minimum distance between the joints, it is possible to add a constraint of the type: max (min H) ≥ Hmin. Should the resulting linear system be unable to observe this constraint, it will be possible to vary the vector of the P parameters (with Pi components) discarding a determined length of material of such a value as to enable the result to be reached.

In addition to the above described criterion, different criteria can be applied or the described system can be evolved.

For instance, in the method of controlling building of a tyre according to the present invention provision can be made for ascribing a different weight to each selected joint and/or each selected component as a function of its influence on said first parameter. In particular, in case of maximisation of the minimum distance, different weights can be added to each distance H. Alternatively, systems of vector sum of the joints can be applied, being suitably weighed based on the related influence that each joint has in relation to the parameter to be optimised.

In accordance with a possible example, the criterion of maximising the minimum distance between the joints can be applied, in particular to the carcass ply/plies and/or the sidewalls and/or the tread band.

In accordance with a possible embodiment applicable to anyone of the described examples, the method of controlling building of a tyre according to the present invention contemplates detection of the presence of the at least one preparation joint and a position thereof relative to at least one of the two cutting lines of the respective semifinished product.

In particular, provision may be made for monitoring at least one semifinished product belonging to the sub-assembly Kj of the semifinished products obtained by a manufacturing method in which formation of preparation joints along the semifinished product is provided, and for detecting the presence of a preparation joint and the linear distance Pj of same relative to at least one of the two cutting lines of the monitored semifinished product.

For instance, the feeding stations can detect, preferably through laser photocells for thickness measurement, the presence of a preparation joint and the related position with respect to the point at which the continuous elongated semifinished product will be cut (building joint).

In accordance with the above described examples, a plant adapted to apply a method according to the present invention can comprise a control unit, not shown, operatively connected to the reading of the presence and position of the preparation joints and, for instance, programmable according to one or more of the described examples.

In accordance with a further aspect, the present invention relates to a group of at least one first and one second tyre belonging to the same production batch. In particular the tyres of the same group are marked by the same DOT Code.

Each tyre of the group comprises components obtained from elementary semifinished products, having respective free ends disposed adjacent to each other or overlapped so as to form a building joint.

At least one component of each tyre comprises at least one preparation joint.

A first assembly of selected joints of the first tyre comprises building joints and at least one preparation joint of at least two selected components of the first tyre. A second assembly of selected joints of the second tyre comprises building joints and at least one preparation joint of at least two selected components of the second tyre, corresponding to the selected components of the first tyre.

The position of the first assembly relative to the at least one corresponding preparation joint and of the second assembly relative to the at least one corresponding preparation joint are different from each other within the same range of values of a first parameter describing the tyre evenness.

Preferably, the position of the first assembly related to the at least one corresponding preparation joint and of the second assembly related to the at least one corresponding preparation assembly are different from each other within a 20% variation, more preferably a 10% variation, of the value of a first parameter describing the tyre evenness.

In accordance with a possible embodiment, the first parameter comprises the Radial Runout (RRO) of each tyre and/or the Radial Force Variation (RFV) of each tyre.

In particular, the Radial Runout (RRO) value of each tyre is included between about 0 mm and about 1.5 mm, more preferably between about 0 mm and about 0.5 mm. Preferably, the Radial Force Variation (RFV) value of each tyre is included between about 0 N and about 80 N, more preferably between about 0 N and about 40 N.

## Claims

1. A method of controlling building of a tyre, wherein said building comprises:
- making Si continuous elongated semifinished products adapted to form components of at least one structural portion of a tyre, with "i" included between 1 and N, each of said Si semifinished products being obtained through application of a respective manufacturing method in which for a sub-assembly Kj of the Si semifinished products, with "j" included between 1 and M and M<N, formation of preparation joints GPj is provided along the semifinished product itself,
- cutting the Si semifinished products to size for obtaining Ei elementary semifinished products,
- circumferentially winding one of the elementary semifinished products Ei cut to size forming a building joint GCi by moving adjacent to each other or overlapping the respective cutting lines on the semifinished product and obtaining a component Ci of the structural portion;
wherein said method of controlling building of a tyre comprises:
- defining an assembly of selected components comprising an assembly of selected joints including at least two building joints and at least one preparation joint,
- calculating the relative position of the selected joints the relative position of the at least one preparation joint on the respective component being known, using at least one algorithm adapted to optimise the value of at least one first parameter describing the tyre evenness;
- controlling deposition of the selected components comprising the selected joints for obtaining the calculated relative position of the selected joints themselves.

2. A method of controlling building of a tyre as claimed in claim 1, wherein at least one of said selected joints belongs to a structural portion different from that to which the other selected joints belong.

3. A method of controlling building of a tyre as claimed in claim 2, wherein at least one first joint of said selected joints belongs to a carcass structure, and wherein at least one second joint of said selected joints belongs to a crown structure, said carcass structure and crown structure defining respective structural portions of the tyre.

4. A method of controlling building of a tyre as claimed in claim 3, comprising:
- setting the selected components of the carcass structure and crown structure,
- calculating the relative position of the selected joints of the carcass structure and crown structure,
- controlling deposition of the selected components belonging to the carcass structure for obtaining the calculated relative position of the selected joints of the carcass structure,
- controlling deposition of the selected components belonging to the crown structure for obtaining the calculated relative position of the selected joints of the crown structure.

5. A method of controlling building of a tyre as claimed in claim 4, comprising:
- calculating the angular phase shift between the crown structure and carcass structure obtained separately, as a function of the calculated relative position of the selected joints,
- controlling coupling between the carcass structure and crown structure for obtaining the calculated angular phase shift.

6. A method of controlling building of a tyre as claimed in claim 5, comprising:
- detecting the geometry of the carcass structure,
- calculating a variation of the angular phase shift between the crown structure and carcass structure at least as a function of the true geometry of the carcass structure,
- controlling coupling between the carcass structure and crown structure for obtaining the calculated angular phase shift inclusive of variation.

7. A method of controlling building of a tyre as claimed in claim 3, comprising:
- setting the selected components of the carcass structure,
- calculating the relative position of the selected joints of the carcass structure using a first algorithm adapted to optimise the value of a first parameter describing the tyre evenness,
- controlling deposition of the selected components belonging to the carcass structure for obtaining the calculated relative position of the selected joints of the carcass structure,
- detecting the geometry of the carcass structure,
- setting the selected components of the crown structure,
- calculating the relative position of the selected joints of the crown structure using a second algorithm adapted to optimise the value of the first parameter describing the tyre evenness as a function of the true geometry of the carcass structure,
- controlling deposition of the selected components belonging to the crown structure for obtaining the calculated relative position of the selected joints of the crown structure.

8. Method of controlling building of a tyre as claimed in claim 1, comprising:
- monitoring at least one semifinished product belonging to the sub-assembly Kj of the semifinished products obtained by a manufacturing method in which formation of preparation joints along the semifinished product is provided,
- detecting the presence of the at least one preparation joint and a position thereof relative to at least one of the two cutting lines of the respective semifinished product comprising detecting the presence of a preparation joint and the linear distance of same relative to at least one of the two cutting lines of the monitored semifinished product.

9. A method of controlling building of a tyre as claimed in one or more of the preceding claims, comprising:
- setting a constraint in the calculation of the relative position of the selected joints,
- discarding a length of the at least one semifinished product belonging to the sub-assembly Kj obtained by a manufacturing method in which formation of preparation joints is provided along the semifinished product in case of non-observance of said constraint.

10. A method of controlling building of a tyre as claimed in one or more of the preceding claims, comprising:
- maximising the minimum distance between the selected joints.

11. A method of controlling building of a tyre as claimed in one or more of the preceding claims, comprising:
- ascribing a different weight to each selected joint and/or each selected component as a function of the influence of same on said first parameter.

12. A group of at least one first and one second tyre belonging to the same production batch and marked by the same DOT Code,
wherein each tyre comprises components obtained from elementary semifinished products,
wherein each elementary semifinished product comprises respective free ends disposed adjacent to each other or in overlapped relationship to form a building joint, wherein at least one component of each tyre comprises at least one preparation joint,
wherein a first assembly of selected joints of the first tyre comprises building joints and at least one preparation joint of at least two selected components of the first tyre,
wherein a second assembly of selected joints of the second tyre comprises building joints and at least one preparation joint of at least two selected components of the second tyre, corresponding to the selected components of the first tyre,
and wherein the position of the first assembly relative to the at least one corresponding preparation joint and of the second assembly relative to the at least one corresponding preparation joint are different from each other within the same range of values of a first parameter describing the tyre evenness.

13. A group of at least one first and one second tyre belonging to the same production batch as claimed in claim 12, wherein the position of the first assembly relative to the at least one corresponding preparation joint and of the second assembly relative to the at least one corresponding preparation joint are different from each other within a 20% variation of the value of a first parameter describing the tyre evenness.

14. A group of at least one first and one second tyre belonging to the same production batch as claimed in one or more of claims 12 to 13, wherein said first parameter comprises the Radial Runout (RRO) of each tyre and wherein the Radial Runout (RRO) value of each tyre is included between about 0 mm and about 1.5 mm.

15. A group of at least one first and one second tyre belonging to the same production batch as claimed in one or more of claims 12-14, wherein said first parameter comprises the Radial Force Variation (RFV) of each tyre and wherein the Radial Force Variation (RFV) value of each tyre is included between about 0 N and about 80 N.

## Patentansprüche

1. Verfahren zur Steuerung der Herstellung eines Reifens, wobei die Herstellung umfasst:
- Herstellen von Sᵢ durchgehenden länglichen halbfertigen Produkten, die dazu geeignet sind, Komponenten zumindest eines strukturellen Abschnitts eines Reifens zu bilden, wobei "i" zwischen 1 und N liegt, wobei jedes der Sᵢ halbfertigen Produkte durch Anwendung eines jeweiligen Herstellungsverfahrens erhalten wird, bei dem für eine Teilgruppe Kj der Sᵢ halbfertigen Produkte, wobei "j" zwischen 1 und M liegt und M<N gilt, die Bildung von Vorbereitungsstößen GPⱼ entlang des halbfertigen Produkts selbst bereitgestellt wird,
- Zuschneiden der Sᵢ halbfertigen Produkte, um Ei halbfertige Ausgangsprodukte zu erhalten,
- Aufwickeln eines der Ei halbfertigen, zugeschnittenen Ausgangsprodukte in Umfangsrichtung, um einen Herstellungsstoß GCᵢ zu bilden, indem die jeweiligen Schnittlinien an dem halbfertigen Produkt aneinander bewegt oder überlappt werden, und Erhalten einer Komponente Cᵢ des strukturellen Abschnitts;
wobei das Verfahren zur Steuerung der Herstellung eines Reifens die folgende Schritte umfasst:
- Definieren einer Gruppe von ausgewählten Komponenten mit einer Gruppe von ausgewählten Stößen, die zumindest zwei Fertigungsstöße und zumindest einen Vorbereitungsstoß umfassen,
- Berechnen der relativen Stellung der ausgewählten Stöße, wobei die relative Stellung des zumindest einen Vorbereitungsstoßes an der jeweiligen Komponente bekannt ist, unter Verwendung zumindest eines Algorithmus, der dazu geeignet ist, den Wert zumindest eines ersten Parameters, der die Gleichförmigkeit des Reifens beschreibt, zu optimieren;
- Steuern der Ablage der ausgewählten Komponenten mit den ausgewählten Stößen, um die berechnete relative Stellung der ausgewählten Stöße selbst zu erhalten.

2. Verfahren zur Steuerung der Herstellung eines Reifens nach Anspruch 1, wobei zumindest einer der ausgewählten Stöße zu einem strukturellen Abschnitt gehört, der sich von jenem unterscheidet, zu dem die anderen ausgewählten Stöße gehören.

3. Verfahren zur Steuerung der Herstellung eines Reifens nach Anspruch 2, wobei zumindest ein erster Stoß der ausgewählten Stöße zu einer Karkassenstruktur gehört, und wobei zumindest ein zweiter Stoß der ausgewählten Stöße zu einer Zenithstruktur gehört, wobei die Karkassenstruktur und die Zenithstruktur jeweilige strukturelle Abschnitte des Reifens definieren.

4. Verfahren zur Steuerung der Herstellung eines Reifens nach Anspruch 3, das die folgenden Schritte umfasst:
- Einstellen der ausgewählten Komponenten der Karkassenstruktur und der Zenithstruktur,
- Berechnen der relativen Stellung der ausgewählten Stöße der Karkassenstruktur und der Zenithstruktur,
- Steuern der Ablage der ausgewählten Komponenten, die der Karkassenstruktur zugeordnet sind, um die berechnete relative Stellung der ausgewählten Stöße der Karkassenstruktur zu erhalten,
- Steuern der Ablage der ausgewählten Komponenten, die der Zenithstruktur zugeordnet sind, um die berechnete relative Stellung der ausgewählten Stöße der Zenithstruktur zu erhalten.

5. Verfahren zur Steuerung der Herstellung eines Reifens nach Anspruch 4, das die folgenden Schritte umfasst:
- Berechnen der Phasenwinkelverschiebung zwischen der Zenithstruktur und der Karkassenstruktur, die separat erhalten werden, als eine Funktion der berechneten relativen Stellung der ausgewählten Stöße,
- Steuern der Kopplung zwischen der Karkassenstruktur und der Zenithstruktur, um die berechnete Phasenwinkelverschiebung zu erhalten.

6. Verfahren zur Steuerung der Herstellung eines Reifens nach Anspruch 5, das die folgenden Schritte umfasst:
- Erfassen der Geometrie der Karkassenstruktur,
- Berechnen einer Abweichung der Phasenwinkelverschiebung zwischen der Zenithstruktur und der Karkassenstruktur zumindest als eine Funktion der tatsächlichen Geometrie der Karkassenstruktur,
- Steuern der Kopplung zwischen der Karkassenstruktur und der Zenithstruktur, um die berechnete Phasenwinkelverschiebung einschließlich der Abweichung zu erhalten.

7. Verfahren zur Steuerung der Herstellung eines Reifens nach Anspruch 3, das die folgenden Schritte umfasst:
- Einstellen der ausgewählten Komponenten der Karkas senstruktur,
- Berechnen der relativen Stellung der ausgewählten Stöße der Karkassenstruktur unter Verwendung eines ersten Algorithmus, der dazu geeignet ist, den Wert zumindest eines ersten Parameters, der die Gleichförmigkeit des Reifens beschreibt, zu optimieren,
- Steuern der Ablage der ausgewählten Komponenten, die der Karkassenstruktur zugeordnet sind, um die berechnete relative Stellung der ausgewählten Stöße der Karkassenstruktur zu erhalten,
- Erfassen der Geometrie der Karkassenstruktur,
- Einstellen der ausgewählten Komponenten der Zenithstruktur,
- Berechnen der relativen Stellung der ausgewählten Stöße der Zenithstruktur unter Verwendung eines zweiten Algorithmus, der dazu geeignet ist, den Wert des ersten Parameters, der die Gleichförmigkeit des Reifens beschreibt, als eine Funktion der tatsächlichen Geometrie der Karkassenstruktur zu optimieren,
- Steuern der Ablage der ausgewählten Komponenten, die der Zenithstruktur zugeordnet sind, um die berechnete relative Stellung der ausgewählten Stöße der Zenithstruktur zu erhalten.

8. Verfahren zur Steuerung der Herstellung eines Reifens nach Anspruch 1, das die folgenden Schritte umfasst:
- Überwachen zumindest eines halbfertigen Produkts, das der Teilgruppe Kⱼ der halbfertigen Produkte zugeordnet ist, die durch ein Herstellungsverfahren erhalten werden, bei dem die Bildung von Vorbereitungsstößen entlang des halbfertigen Produkts bereitgestellt wird,
- Erfassen des Vorliegens des zumindest einen Vorbereitungsstoßes und einer Stellung desselben relativ zu zumindest einer der beiden Schnittlinien des jeweiligen halbfertigen Produkts, umfassend das Erfassen des Vorliegens eines Vorbereitungsstoßes sowie des linearen Abstandes desselben relativ zu zumindest einer der beiden Schnittlinien des überwachten habfertigen Produkts.

9. Verfahren zur Steuerung der Herstellung eines Reifens nach einem oder mehreren der vorhergehenden Ansprüche, das die folgenden Schritte umfasst:
- Einstellen einer Beschränkung in der Berechnung der relativen Stellung der ausgewählten Stöße,
- Verwerfen einer Länge des zumindest einen halbfertigen Produkts, das zu der Teilgruppe Kⱼ gehört, die durch ein Herstellungsverfahren erhalten wird, bei dem die Bildung von Vorbereitungsstößen entlang des halbfertigen Produkts bereitgestellt wird, in dem Fall, dass die Beschränkung nicht eingehalten wird.

10. Verfahren zur Steuerung der Herstellung eines Reifens nach einem oder mehreren der vorhergehenden Ansprüche, umfassend den folgenden Schritt:
- Maximieren des Mindestabstands zwischen den ausgewählten Stößen.

11. Verfahren zur Steuerung der Herstellung eines Reifens nach einem oder mehreren der vorhergehenden Ansprüche, umfassend den folgenden Schritt:
- Zuordnen einer unterschiedlichen Gewichtung an jeden ausgewählten Stoß und/oder jede ausgewählte Komponente als eine Funktion des Einflusses derselben auf den ersten Parameter.

12. Gruppe aus zumindest einem ersten und einem zweiten Reifen, die zu derselben Fertigungscharge gehören und mit demselben DOT-Code markiert sind,
wobei jeder Reifen Komponenten umfasst, die aus halbfertigen Ausgangsprodukten erhalten werden,
wobei jedes halbfertige Ausgangsprodukt jeweils freie Enden umfasst, die benachbart zueinander angeordnet sind oder in einer überlappenden Beziehung zueinander stehen, um einen Fertigungsstoß zu bilden,
wobei zumindest eine Komponente jedes Reifens zumindest einen Vorbereitungsstoß umfasst,
wobei eine erste Gruppe ausgewählter Stöße des ersten Reifens Fertigungsstöße und zumindest einen Vorbereitungsstoß von zumindest zwei ausgewählten Komponenten des ersten Reifens umfasst,
wobei eine zweite Gruppe ausgewählter Stöße des zweiten Reifens Fertigungsstöße und zumindest einen Vorbereitungsstoß von zumindest zwei ausgewählten Komponenten des zweiten Reifens umfasst, die den ausgewählten Komponenten des ersten Reifens entsprechen,
und wobei die Stellung der ersten Gruppe relativ zu dem zumindest einen entsprechenden Vorbereitungsstoß sowie der zweiten Anordnung relativ zu dem zumindest einen entsprechenden Vorbereitungsstoß sich innerhalb desselben Wertebereichs eines ersten Parameters unterscheiden, der die Gleichförmigkeit des Reifens beschreibt.

13. Gruppe aus zumindest einem ersten und einem zweiten Reifen, die zu derselben Fertigungscharge gehören, nach Anspruch 12, wobei die Stellung der ersten Gruppe relativ zu dem zumindest einen entsprechenden Vorbereitungsstoß sowie der zweiten Anordnung relativ zu dem zumindest einen entsprechenden Vorbereitungsstoß sich innerhalb einer Schwankungsbreite von 20 % des Werts eines ersten Parameters unterscheiden, der die Gleichförmigkeit des Reifens beschreibt.

14. Gruppe aus zumindest einem ersten und einem zweiten Reifen, die zu derselben Fertigungscharge gehören, nach einem oder mehreren der Ansprüche 12 bis 13, wobei der erste Parameter die Rundlaufabweichung (RRO) jedes Reifens ist, und wobei der Wert der Rundlaufabweichung (RRO) jedes Reifens zwischen etwa 0 mm und etwa 1,5 mm liegt.

15. Gruppe aus zumindest einem ersten und einem zweiten Reifen, die zu derselben Fertigungscharge gehören, nach einem oder mehreren der Ansprüche 12 bis 14, wobei der erste Parameter die Radialkraftschwankung (RFV) jedes Reifens ist, und wobei der Wert der Radialkraftschwankung (RFV) jedes Reifens zwischen etwa 0 N und etwa 80 N liegt.

## Revendications

1. Procédé de commande de la construction d'un pneu, dans lequel ladite construction comprend le fait :
- de fabriquer des produits semi-finis allongés continus Si adaptés pour former des composants d'au moins une partie structurelle d'un pneu, avec i compris entre 1 et N, chacun desdits Si produits semi-finis étant obtenu par l'application d'un procédé de fabrication respectif dans lequel pour un sous-ensemble Kj des produits Si semi-finis, avec "j" compris entre 1 et M et M < N, la formation de joints de préparation GPj est prévue le long du produit semi-fini lui-même,
- de découper les produits Si semi-finis à la dimension voulue pour obtenir des produits semi-finis élémentaires Ei,
- d'enrouler de manière circonférentielle l'un des produits semi-finis élémentaires Ei découpés à la dimension voulue formant un joint de construction GCi en déplaçant les lignes de découpe respectives de manière adjacente les unes aux autres ou en les chevauchant sur le produit semi-fini et d'obtenir un composant Ci de la partie structurelle ;
dans lequel ledit procédé de commande de la construction d'un pneu comprend le fait :
- de définir un ensemble de composants sélectionnés comprenant un ensemble de joints sélectionnés comportant au moins deux joints de construction et au moins un joint de préparation,
- de calculer la position relative des joints sélectionnés, la position relative de l'au moins un joint de préparation sur le composant respectif étant connue, en utilisant au moins un algorithme adapté pour optimiser la valeur d'au moins un premier paramètre décrivant l'uniformité du pneu ;
- de commander le dépôt des composants sélectionnés comprenant les joints sélectionnés pour obtenir la position relative calculée des joints sélectionnés eux-mêmes.

2. Procédé de commande de la construction d'un pneu tel que revendiqué dans la revendication 1, dans lequel au moins l'un desdits joints sélectionnés appartient à une partie structurelle différente de celle à laquelle appartiennent les autres joints sélectionnés.

3. Procédé de commande de la construction d'un pneu tel que revendiqué dans la revendication 2, dans lequel au moins un premier joint desdits joints sélectionnés appartient à une structure de carcasse, et dans lequel au moins un deuxième joint desdits joints sélectionnés appartient à une structure de sommet, ladite structure de carcasse et ladite structure de sommet définissant des parties structurelles respectives d'un pneu.

4. Procédé de commande de la construction d'un pneu tel que revendiqué dans la revendication 3, comprenant le fait :
- de fixer les composants sélectionnés de la structure de carcasse et de la structure de sommet,
- de calculer la position relative des joints sélectionnés de la structure de carcasse et de la structure de sommet,
- de commander le dépôt des composants sélectionnés appartenant à la structure de carcasse pour obtenir la position relative calculée des joints sélectionnés de la structure de carcasse,
- de commander le dépôt des composants sélectionnés appartenant à la structure de sommet pour obtenir la position relative calculée des joints sélectionnés de la structure de sommet.

5. Procédé de commande de la construction d'un pneu tel que revendiqué dans la revendication 4, comprenant le fait :
- de calculer le déphasage angulaire entre la structure de sommet et la structure de carcasse obtenues de manière séparée, en fonction de la position relative calculée des joints sélectionnés,
- de commander un couplage entre la structure de carcasse et la structure de sommet pour obtenir le déphasage angulaire calculé.

6. Procédé de commande de la construction d'un pneu tel que revendiqué dans la revendication 5, comprenant le fait :
- de détecter la géométrie de la structure de carcasse,
- de calculer une variation du déphasage angulaire entre la structure de sommet et la structure de carcasse au moins en fonction de la géométrie réelle de la structure de carcasse,
- de commander un couplage entre la structure de carcasse et la structure de sommet pour obtenir le déphasage angulaire calculé en tenant compte de la variation.

7. Procédé de commande de la construction d'un pneu tel que revendiqué dans la revendication 3, comprenant le fait :
- de fixer les composants sélectionnés de la structure de carcasse,
- de calculer la position relative des joints sélectionnés de la structure de carcasse en utilisant un premier algorithme adapté pour optimiser la valeur d'un premier paramètre décrivant l'uniformité du pneu,
- de commander le dépôt des composants sélectionnés appartenant à la structure de carcasse pour obtenir la position relative calculée des joints sélectionnés de la structure de carcasse,
- de détecter la géométrie de la structure de carcasse,
- de fixer les composants sélectionnés de la structure de sommet,
- de calculer la position relative des joints sélectionnés de la structure de sommet en utilisant un deuxième algorithme adapté pour optimiser la valeur du premier paramètre décrivant l'uniformité du pneu en fonction de la géométrie réelle de la structure de carcasse,
- de commander le dépôt des composants sélectionnés appartenant à la structure de sommet pour obtenir la position relative calculée des joints sélectionnés de la structure de sommet.

8. Procédé de commande de la construction d'un pneu tel que revendiqué dans la revendication 1, comprenant le fait :
- de surveiller au moins un produit semi-fini appartenant au sous-ensemble Kj des produits semi-finis obtenus par un procédé de fabrication dans lequel la formation de joints de préparation le long du produit semi-fini est prévue,
- de détecter la présence de l'au moins un joint de préparation et sa position par rapport à au moins l'une des deux lignes de découpe des produits semi-finis respectifs comprenant le fait de détecter la présence d'un joint de préparation et sa distance linéaire par rapport à au moins l'une des deux lignes de découpe du produit semi-fini surveillé.

9. Procédé de commande de la construction d'un pneu tel que revendiqué dans une ou plusieurs des revendications précédentes, comprenant le fait :
- de fixer une contrainte dans le calcul de la position relative des joints sélectionnés,
- de rejeter une longueur de l'au moins un produit semi-fini appartenant au sous-ensemble Kj obtenu par un procédé de fabrication dans lequel la formation de joints de préparation est prévue le long du produit semi-fini en cas de non-respect de ladite contrainte.

10. Procédé de commande de la construction d'un pneu tel que revendiqué dans une ou plusieurs des revendications précédentes, comprenant le fait :
- de maximiser la distance minimale entre les joints sélectionnés.

11. Procédé de commande de la construction d'un pneu tel que revendiqué dans une ou plusieurs des revendications précédentes, comprenant le fait :
- d'attribuer un poids différent à chaque joint sélectionné et/ou à chaque composant sélectionné en fonction de son/leurs influence sur ledit premier paramètre.

12. Groupe d'au moins un premier et un deuxième pneu appartenant au même lot de production et marqués par le même code DOT,
dans lequel chaque pneu comprend des composants obtenus à partir de produits semi-finis élémentaires,
dans lequel chaque produit semi-fini élémentaire comprend des extrémités libres respectives disposées de manière adjacente les unes aux autres ou dans une relation de chevauchement pour former un joint de construction,
dans lequel au moins un composant de chaque pneu comprend au moins un joint de préparation,
dans lequel un premier ensemble de joints sélectionnés du premier pneu comprend des joints de construction et au moins un joint de préparation d'au moins deux composants sélectionnés du premier pneu,
dans lequel un deuxième ensemble de joints sélectionnés du deuxième pneu comprend des joints de construction et au moins un joint de préparation d'au moins deux composants sélectionnés du deuxième pneu, correspondant aux composants sélectionnés du premier pneu,
et dans lequel les positions du premier ensemble par rapport à l'au moins un joint de préparation correspondant et du deuxième ensemble par rapport à l'au moins un joint de préparation correspondant sont différentes l'une de l'autre dans la même plage de valeurs d'un premier paramètre décrivant l'uniformité du pneu.

13. Groupe d'au moins un premier et un deuxième pneu appartenant au même lot de production tel que revendiqué dans la revendication 12, dans lequel les positions du premier ensemble par rapport à l'au moins un joint de préparation correspondant et du deuxième ensemble par rapport à l'au moins un joint de préparation correspondant sont différentes l'une de l'autre dans une variation de 20% de la valeur d'un premier paramètre décrivant l'uniformité du pneu.

14. Groupe d'au moins un premier et un deuxième pneu appartenant au même lot de production tel que revendiqué dans au moins l'une des revendications 12 et 13, dans lequel ledit premier paramètre comprend le faux rond (RRO) de chaque pneu et dans lequel la valeur de faux rond (RRO) de chaque pneu est comprise entre environ 0 mm et environ 1,5 mm.

15. Groupe d'au moins un premier et un deuxième pneu appartenant au même lot de production tel que revendiqué dans au moins l'une des revendications 12 à 14, dans lequel ledit premier paramètre comprend la variation de force radiale (RFV) de chaque pneu et dans lequel la valeur de variation de force radiale (RFV) de chaque pneu est comprise entre environ 0 N et environ 80 N.
